# FASCICULE DE BREVET EUROPEEN

(11) **EP 3 673 163 B1**
(45) Date de publication et mention de la délivrance du brevet: **12.05.2021**
(21) Numéro de dépôt: 18785417.9
(22) Date de dépôt: 22.08.2018
(51) Int. Cl.: F02C 7/045, F02C 7/24, F02K 1/82

(54) **STRUCTURE ALVÉOLAIRE ET DISPOSITIF D'ATTÉNUATION ACOUSTIQUE POUR NACELLE D'ENSEMBLE PROPULSIF D'AÉRONEF**
ZELLSTRUKTUR UND SCHALLDÄMPFUNGSVORRICHTUNG FÜR EINE GONDEL EINER FLUGZEUGANTRIEBSANORDNUNG
CELL STRUCTURE AND ACOUSTIC ATTENUATION DEVICE FOR A NACELLE OF AN AIRCRAFT PROPULSION ASSEMBLY

(30) Priorité: 25.08.2017 FR 1757894
(43) Date de publication de la demande: 01.07.2020
(73) Titulaire: Safran Nacelles, 76700 Gonfreville-l'Orcher (FR); Safran Ceramics, 33185 Le Haillan (FR)
(72) Inventeur: DESJOYEAUX, Bertrand, 76700 Gonfreville l'Orcher (FR); SILVA DE VASCONCELLOS, Davi, 76700 Gonfreville l'Orcher (FR); BOUILLON, Florent, 33290 Parempuyre (FR); DELEHOUZE, Arnaud, 33320 Le Taillan Medoc (FR)
(74) Mandataire: Delorme, Nicolas
(86) Numéro de dépôt international: PCT/FR2018/052091
(87) Numéro de publication internationale: WO 2019/038506

(56) Documents cités:
- US-A1- 2015 060 194

## Description

La présente invention se rapporte au domaine du traitement acoustique de nacelles d'ensemble propulsif d'aéronef. De manière non limitative, la présente invention concerne un dispositif d'atténuation acoustique pour tuyère d'échappement d'une telle nacelle. Cet ensemble propulsif peut comprendre un turboréacteur ou une turbomachine. Cet aéronef peut être un avion ou un hélicoptère.

Dans l'état de la technique antérieure, il est connu d'atténuer le bruit généré par un turboréacteur d'aéronef ou une turbomachine d'aéronef à l'aide de panneaux acoustiques. Un panneau acoustique comprend typiquement deux peaux et une structure alvéolaire du type nid d'abeille enserrée entre les deux peaux. L'une des peaux, orientée vers la source de bruit, est perméable à l'air afin de capter les ondes acoustiques et de réduire l'énergie acoustique au sein de la structure alvéolaire. En particulier, le cône d'éjection ou la buse primaire d'une tuyère d'échappement sont typiquement équipés de tels panneaux acoustiques.

Des panneaux acoustiques tels que présentés dans le document US 2015/060194 peuvent également présenter des languettes disposée au travers des cellules de la structure alvéolaire afin d'améliorer l'absorption du son.

Compte tenu des contraintes thermiques que subit une tuyère d'échappement et du coût des matériaux céramiques, il est souhaitable de réaliser les panneaux acoustiques destinés à de telles applications en intégrant à la fois des matériaux céramiques et des composants métalliques, ces derniers étant moins coûteux.

Toutefois, ces différents matériaux se dilatent différemment et à des températures différentes dans l'environnement d'utilisation des pièces ce qui peut introduire des contraintes mécaniques inacceptables entre les peaux et la structure alvéolaire d'un tel panneau acoustique.

Un but de la présente invention est de surmonter les inconvénients des panneaux acoustiques connus dans l'état de la technique antérieure, en proposant un dispositif d'atténuation acoustique limitant les contraintes thermomécaniques induites par des champs de température et la différence de coefficient de dilatations thermiques des différents matériaux qui composent le dispositif.

A cet effet, l'invention se rapporte, selon un premier aspect, à une structure alvéolaire pour dispositif d'atténuation acoustique pour nacelle d'ensemble propulsif d'aéronef. Cette structure comprend des cloisons latérales formant des canaux qui s'étendent chacun entre une première extrémité et une deuxième extrémité.

Selon l'invention, cette structure comprend des éléments de peau agencés de sorte que chaque canal soit au moins partiellement fermé en sa première extrémité par au moins un élément de peau.

La structure alvéolaire de l'invention comprend donc plusieurs éléments de peau distincts les uns des autres.

Autrement dit, chaque canal peut au moins partiellement être fermé en sa première extrémité par au moins un élément de peau :
- propre à ce canal, c'est-à-dire ne refermant au moins partiellement que ce canal, ou
- propre à ce canal et à un ou plusieurs canaux adjacents à ce canal.

Autrement dit, un premier canal est au moins partiellement fermé en sa première extrémité par au moins un premier élément de peau et un deuxième canal est au moins partiellement fermé en sa première extrémité par au moins un deuxième élément de peau, ledit au moins un deuxième élément de peau étant différent de l'au moins un premier élément de peau. Dans cet exemple, si ledit deuxième canal est adjacent audit premier canal, ledit deuxième canal peut être partiellement fermé en sa première extrémité par ledit au moins un premier élément de peau.

Selon l'invention, chaque élément de peau est relié à une cloison latérale respective et est mobile par rapport aux autres cloisons latérales.

Dans l'expression qui précède, le terme « respective » signifie qu'un élément de peau donné est relié à une et une seule cloison latérale et réciproquement.

Dans le présent document, le terme « mobile » est défini comme « pouvant être déplacé ». Autrement dit, un élément de peau relié à une cloison latérale n'est pas fixé aux autres cloisons latérales de la structure alvéolaire. En particulier, un élément de peau relié à une cloison latérale d'un canal n'est pas fixé aux autres cloisons latérales de ce canal si bien que cet élément de peau peut être déplacé par rapport à ces autres cloisons latérales, au moins suivant une direction longitudinale suivant laquelle s'étende cet élément de peau. Une telle mobilité longitudinale peut être provoquée par la dilatation thermique de la structure alvéolaire.

Selon une première variante, chaque élément de peau peut être fixé à une cloison latérale respective, par exemple par soudage ou rivetage ou boulonnage ou sertissage ou collage.

Selon une deuxième variante, chaque élément de peau peut constituer avec la cloison latérale à laquelle il est relié une pièce unique.

Dans un mode de réalisation, chaque canal peut au moins partiellement être fermé en sa première extrémité par un premier élément de peau et un deuxième élément de peau.

Dans un mode de réalisation, pour chaque canal, ledit premier élément de peau et ledit deuxième élément de peau peuvent, au moins partiellement, être superposés.

Dans un mode de réalisation, une partie d'un élément de peau d'un premier canal peut recouvrir une partie d'au moins un autre élément de peau d'au moins un deuxième canal adjacent au premier canal.

Un élément de peau ainsi partiellement recouvert par un autre élément de peau peut ainsi :
- être maintenu par cet autre élément de peau contre des cloisons latérales du canal correspondant, c'est-à-dire être immobilisé suivant une direction transversale de la structure alvéolaire suivant laquelle s'étendent les canaux,
- glisser suivant la direction longitudinale de la structure alvéolaire, par rapport aux cloisons latérales auxquelles il n'est pas fixé, par exemple sous l'effet d'une dilatation thermique différentielle de cet élément de peau et des cloisons latérales.

Dans un mode de réalisation, pour une partie au moins des cloisons latérales, chaque cloison latérale peut délimiter deux canaux adjacents.

Les éléments de peaux forment une peau discontinue, cette peau discontinue étant de préférence agencée pour fermer au moins partiellement l'ensemble des canaux en leur première extrémité.

De préférence, chaque canal peut être délimité par au moins quatre cloisons latérales. Plus préférentiellement, chaque canal peut être délimité par au moins six cloisons latérales.

De préférence, la structure alvéolaire peut être agencée de sorte que deux cloisons latérales adjacentes de deux canaux adjacents respectifs ne soient pas coplanaires, de préférence au moins dans le voisinage d'une zone de liaison entre ces canaux.

Un tel agencement permet d'éviter la continuité de contraintes mécaniques d'une cloison latérale à une autre cloison latérale, et favorise la flexibilité et la relaxation de la structure alvéolaire lorsque celle-ci est soumise à des contraintes thermiques.

Dans un mode de réalisation, pour chaque canal, une ou plusieurs cloisons latérales peuvent comprendre des parois ondulées ou des facettes angulées entre elles.

De telles parois ondulées ou facettes angulées entre elles amplifient la capacité de la structure alvéolaire à absorber des dilatations thermiques en limitant les contraintes mécaniques induites dans cette structure.

Chaque canal peut de préférence constituer une partie de cavité de Helmholtz agencée pour atténuer un bruit généré par un ensemble propulsif (turboréacteur ou turbomachine) d'aéronef lorsque ce canal est au moins partiellement fermé en sa deuxième extrémité.

Selon un deuxième aspect, l'invention concerne un dispositif d'atténuation acoustique pour nacelle d'ensemble propulsif d'aéronef, ce dispositif comprenant, d'une part, une structure alvéolaire telle que définie ci-dessus et, d'autre part, une peau continue fermant au moins partiellement les canaux de cette structure alvéolaire en leur deuxième extrémité.

Un tel dispositif d'atténuation acoustique limite ou empêche la transmission d'efforts mécaniques, thermomécaniques et/ou vibratoires d'un élément de peau à un autre élément de peau de la peau discontinue puisque ces éléments de peau sont multiples et discontinus, et réduit ou annule le phénomène de dilatation thermomécanique différentielle entre la peau continue et la peau discontinue.

De plus, la structure alvéolaire selon l'invention préserve ou améliore sa conformabilité par rapport à une structure alvéolaire conventionnelle, ce qui permet notamment de l'assembler avec une peau continue non plane. Un dispositif d'atténuation acoustique non plan est par exemple requis pour équiper ou constituer tout ou partie d'une tuyère d'éjection ou de nombreux autres composants d'une nacelle de turboréacteur ou de turbomachine ou plus généralement d'ensemble propulsif d'aéronef.

Selon une première variante, la peau continue peut être agencée pour laisser pénétrer des ondes acoustiques dans les canaux de la structure alvéolaire. Pour ce faire, la peau continue peut par exemple comprendre des orifices ou un grillage. Autrement dit, la peau continue est dans ce cas acoustiquement perméable.

Selon cette première variante, chaque canal constitue une cavité de Helmholtz ayant un fond de cavité constitué par au moins un élément de peau de la peau discontinue.

Selon une deuxième variante, une partie au moins des éléments de peau de la structure alvéolaire peut être agencée pour laisser pénétrer des ondes acoustiques dans les canaux de cette structure alvéolaire. Pour ce faire, ces éléments de peau peuvent par exemple comprendre des orifices. Autrement dit, les éléments de peau de la peau discontinue sont dans ce cas acoustiquement perméables. Selon cette deuxième variante, chaque canal constitue une cavité de Helmholtz ayant un fond de cavité constitué par ladite peau continue.

La première variante semble préférable pour réduire la trainée puisque la peau continue peut, en tant qu'elle forme une surface externe continue, être dotée des caractéristiques aérodynamiques optimales.

Dans un mode de réalisation, la structure alvéolaire peut comprendre un matériau métallique et la peau continue peut comprendre un matériau composite.

Dans ce dernier mode de réalisation, la structure alvéolaire et la peau continue peuvent être collées l'une à l'autre.

Dans un autre mode de réalisation, la structure alvéolaire peut comprendre du nickel ou un alliage de nickel, et la peau continue peut comprendre un matériau céramique.

Une structure alvéolaire en nickel ou alliage de nickel permet de résister à de très hautes températures.

Dans un autre mode de réalisation, la structure alvéolaire peut comprendre du titane ou un alliage de titane, et la peau continue peut comprendre un matériau céramique.

Une structure alvéolaire en titane ou en alliage de titane est plus légère qu'une structure en métal, cette dernière étant plus résistante. Toutefois, une structure en titane ou en alliage de titane résiste à des températures relativement moins élevées qu'une structure en nickel ou alliage de nickel.

Lorsque la peau continue comprend un matériau céramique (ou matériau composite à matrice céramique), la structure alvéolaire et la peau continue peuvent être collées l'une à l'autre avec une colle céramique. A titre d'exemple, la colle peut être choisie pour assurer des liaisons chimiques pures entre les éléments à coller ou pour réaliser un collage par diffusion d'élément chimique. La colle peut contenir des charges céramiques et des liants qui vont créer des ponts chimiques entre le matériau composite, le métariau métallique et les poudres de la colle. Le frittage finira de donner une faible cohésion à l'ensemble. On peut également utiliser des résines précéramiques, qui peuvent pénétrer dans des porosités du matériau composite.

Dans un mode de réalisation, au moins une partie des cloisons latérales peut être agencée pour améliorer la fixation de la structure alvéolaire avec la peau continue. A cet effet, selon une première variante, des cloisons latérales peuvent comprendre, en leur deuxième extrémité, des crénelures agencées pour s'ancrer dans la colle. Selon une seconde variante, des cloisons latérales peuvent comprendre, en leur deuxième extrémité, des languettes en extension repliées parallèlement à la surface de la peau continue sur laquelle la structure alvéolaire est collée.

Selon un troisième aspect, l'invention concerne un dispositif d'atténuation acoustique pour nacelle d'ensemble propulsif d'aéronef, ce dispositif comprenant :
- une première structure alvéolaire telle que définie ci-dessus,
- une deuxième structure alvéolaire comprenant des canaux qui s'étendent chacun entre une première extrémité et une deuxième extrémité,
- au moins un septum agencé pour séparer la première et la deuxième structure alvéolaire de manière à fermer au moins partiellement les canaux de la première structure alvéolaire en leur deuxième extrémité et les canaux de la deuxième structure alvéolaire en leur première extrémité,
- une peau continue fermant au moins partiellement les canaux de la deuxième structure alvéolaire en leur deuxième extrémité.

L'au moins un septum est de préférence acoustiquement perméable. Pour ce faire, l'au moins un septum peut par exemple comprendre des perforations ou un matériau poreux tel qu'un grillage ou une tôle perforée.

L'invention couvre donc aussi un dispositif à double degré d'atténuation acoustique.

Selon un quatrième aspect, l'invention concerne aussi un dispositif d'atténuation acoustique pour nacelle d'ensemble propulsif d'aéronef, ce dispositif comprenant deux structures alvéolaires selon l'invention et une peau continue fermant au moins partiellement les canaux de ces deux structures alvéolaires en leur deuxième extrémité. Dans un mode de réalisation, les éléments de peau de l'une des structures alvéolaires ainsi que la peau continue peuvent être agencés pour laisser pénétrer des ondes acoustiques dans les canaux de cette structure alvéolaire, tandis que les éléments de peau de l'autre structure alvéolaire sont acoustiquement imperméables. On crée ainsi un dispositif d'atténuation acoustique efficace pour atténuer deux gammes de fréquences en ce qu'il est exposé aux ondes acoustiques le long de la peau discontinue agencée pour laisser passer les ondes acoustiques, et en ce que la peau continue est également agencée pour laisser passer certaines ondes acoustiques.

Dans un mode de réalisation, des cloisons latérales et/ou des éléments de peau peuvent comprendre au moins un orifice de section comprise entre 1 et 4 mm², afin de favoriser le drainage de fluides pouvant entrer dans la structure alvéolaire.

Selon un cinquième aspect, l'invention concerne aussi une nacelle d'ensemble propulsif d'aéronef comprenant un ou plusieurs dispositifs d'atténuation acoustique et/ou une ou plusieurs structures alvéolaires tels que définis ci-dessus.

D'autres caractéristiques et avantages de l'invention apparaîtront à la lecture de la description nullement limitative qui suit et des figures annexées, dans lesquelles :
- La figure 1 est une vue schématique en perspective d'une nacelle de turboréacteur d'aéronef ;
- La figure 2 est une vue schématique partielle en perspective d'une structure alvéolaire selon l'invention ;
- La figure 3 est une vue schématique partielle en coupe de côté de la structure alvéolaire de la figure 2 suivant un plan de coupe parallèle au plan D2-D3 ;
- La figure 4 est une vue schématique partielle en coupe de côté de la structure alvéolaire de la figure 2 suivant un plan de coupe parallèle au plan D1-D3 ;
- La figure 5 est une vue schématique partielle en perspective d'un canal d'une structure alvéolaire selon l'invention ;
- La figure 6 est une vue schématique partielle de dessus d'une structure alvéolaire selon l'invention ;
- La figure 7 est une vue schématique partielle de côté d'un canal d'une structure alvéolaire similaire à celle de la figure 6 dans laquelle l'élément de peau de ce canal est représenté déplié ;
- La figure 8 est une vue schématique partielle en perspective d'une structure alvéolaire similaire à celle de la figure 6 ;
- La figure 9 est une vue schématique partielle en perspective de cloisons latérales et d'éléments de peau d'une structure alvéolaire selon l'invention ;
- La figure 10 est une vue schématique en perspective d'un élément de peau d'une structure alvéolaire selon l'invention ;
- La figure 11 est une vue schématique partielle de dessus de cloisons latérales d'une structure alvéolaire selon l'invention ;
- La figure 12 est une vue schématique partielle de dessus de cloisons latérales d'une structure alvéolaire selon l'invention.

Les éléments identiques ou similaires sont repérés par des signes de référence identiques sur l'ensemble des figures.

L'invention propose une structure alvéolaire et un dispositif d'atténuation acoustique pour nacelle d'ensemble propulsif, par exemple turboréacteur ou turbomachine, d'aéronef.

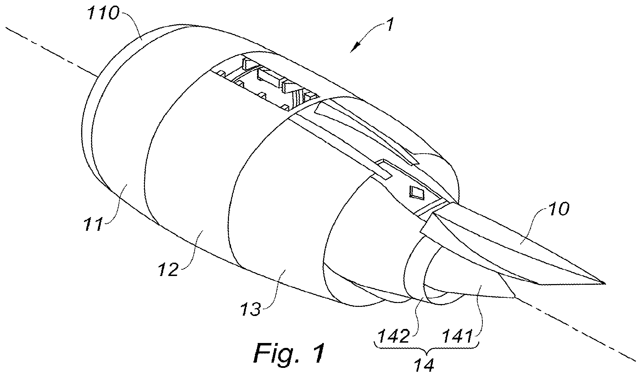

Un exemple de nacelle 1 de turboréacteur (non représenté) d'aéronef (non représenté) est illustré à la figure 1. Cette nacelle 1 comprend un pylône 10 destiné à être fixé à une aile (non représentée) de l'aéronef. La nacelle 1 comprend une section amont 11 dotée d'une lèvre 110 formant une entrée d'air. Cette section amont 11 est adaptée pour permettre la captation optimale vers le turboréacteur de l'air nécessaire à l'alimentation d'une soufflante (non représentée) et de compresseurs internes (non représentés) du turboréacteur. La nacelle 1 comporte aussi une section médiane 12 recevant la soufflante ainsi qu'une section aval 13. Sous le pylône 10 et en aval du turboréacteur, la nacelle 1 comprend une tuyère d'échappement 14 comportant un cône d'éjection de gaz 141 (« plug » en anglais) et une buse primaire 142 (« nozzle » en anglais). Le cône d'éjection 141 et la buse primaire 142 de la tuyère d'échappement 14 définissent un passage pour un flux d'air chaud sortant du turboréacteur.

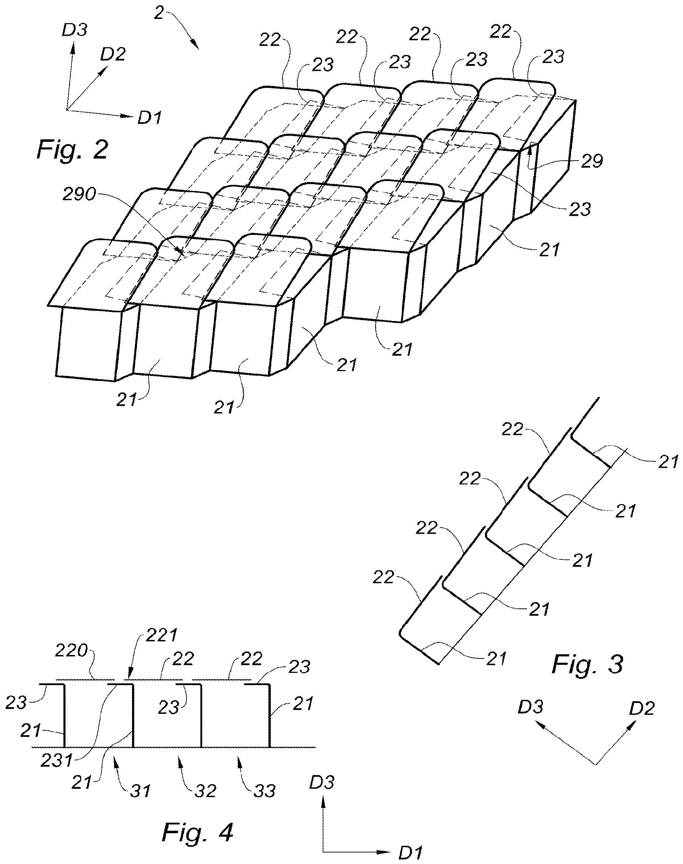

La nacelle 1 et notamment la tuyère d'échappement 14 peuvent comprendre un ou plusieurs dispositifs d'atténuation acoustique et/ou une ou plusieurs structures alvéolaires tels que décrits ci-dessous en référence aux figures 2 et suivantes.

Les figures 2 à 4 montrent un exemple de structure alvéolaire 2 conforme à l'invention.

La structure alvéolaire 2 comprend des cloisons latérales 21 formant des canaux qui s'étendent chacun entre une première extrémité et une deuxième extrémité. En référence à la figure 4, qui montre la structure alvéolaire 2 de la figure 2 en coupe suivant un plan de coupe parallèle au plan D1-D3, la première extrémité est située vers le haut de la figure 4 et la deuxième extrémité est située vers le bas de la figure 4. Dans cet exemple, les canaux 31-33 formés par les cloisons latérales 21 s'étendent suivant une direction transversale D3 et certaines cloisons latérales délimitent deux canaux adjacents.

De manière non limitative, les cloisons latérales 21 peuvent être assemblées entre elles par collage ou brasage ou soudage.

Selon l'invention, la structure alvéolaire 2 comprend en outre des éléments de peau 22 et 23 agencés de sorte que chaque canal soit au moins partiellement fermé en sa première extrémité par au moins un élément de peau, en l'espèce par deux éléments de peau 22 et 23. Chaque canal ainsi fermé forme une alvéole ouverte en sa deuxième extrémité.

Dans l'exemple des figures 2 à 4, chaque canal représenté est partiellement fermé en sa première extrémité, d'une part par un premier élément de peau 22 propre à ce canal et, d'autre part, par un deuxième élément de peau 23 propre à ce canal. En particulier, en référence à la figure 4 qui montre trois canaux 31, 32 et 33, les canaux 31 et 33 étant chacun adjacent au canal 32, le canal 31 est partiellement fermé en sa première extrémité, d'une part par un premier élément de peau 220 (similaire aux autres éléments de peau 22) propre à ce canal et, d'autre part, par un deuxième élément de peau 231 (similaire aux autres éléments de peau 23) propre à ce canal.

Dans cet exemple, chaque canal représenté est en outre partiellement fermé par un premier élément de peau 22 d'un canal adjacent à ce canal, en l'occurrence par une partie 221 dudit premier élément de peau 22 du canal adjacent, ce canal adjacent correspondant dans cet exemple au canal 32 (voir figure 4).

La fermeture partielle des canaux par un premier élément de peau 22 d'un canal adjacent est dans cet exemple utile en raison de la forme de ces canaux qui comprennent chacun plus de quatre cloisons latérales 21. Comme cela apparaît à la figure 2 dans laquelle on se réfère au canal situé en haut à droite de cette figure, la fermeture par les éléments de peau 22 et 23 de ce canal est partielle puisque les éléments de peau 22 et 23 de ce canal définissent une ouverture 29. Ainsi, l'ouverture 29 de ce canal pourrait être fermée par un premier élément de peau 22 d'un canal adjacent (non représenté) qui serait situé à droite de ce canal. Une telle fermeture est par exemple, pour un autre canal illustré à la figure 2, désignée par la référence 290.

La structure alvéolaire 2 de la figure 2 se trouve ainsi recouverte d'une peau discontinue s'étendant sur l'ensemble de la structure par la concaténation ou agrégation des éléments de peaux 22, 23.

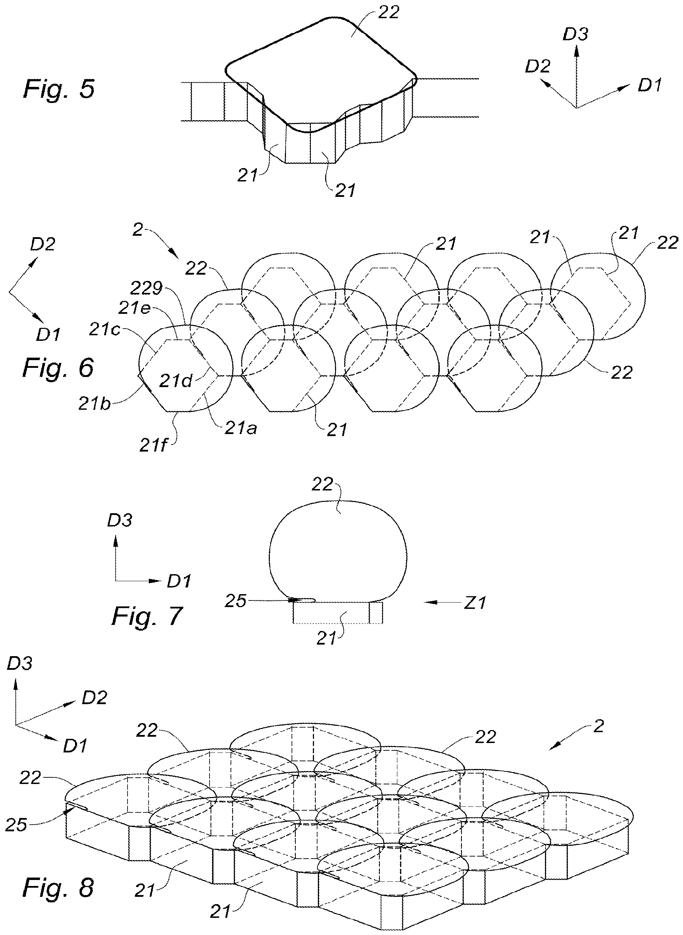

Dans l'exemple de la figure 5, l'unique canal représenté sur cette figure est fermé en sa première extrémité par un unique élément de peau 22.

Par ailleurs, chaque élément de peau 22, 23 est relié à une cloison latérale respective.

Plus spécifiquement, chaque canal de la structure alvéolaire des figures 2 à 4 comprend deux éléments de peaux 22 et 23 reliés à une cloison latérale respective de ce canal, tandis que chaque canal des structures alvéolaires des figures 5 à 8 comprend un unique élément de peau 22 relié à une cloison latérale de ce canal.

Plusieurs types de lien entre élément de peau et cloison latérale sont ici envisagés de manière non limitative.

Un premier type de lien consiste à fixer chaque élément de peau 22 et/ou 23 à une cloison latérale respective, par exemple par soudage ou rivetage ou boulonnage ou sertissage ou encore collage (non représenté). L'élément de peau peut dans cet exemple être un élément rapporté.

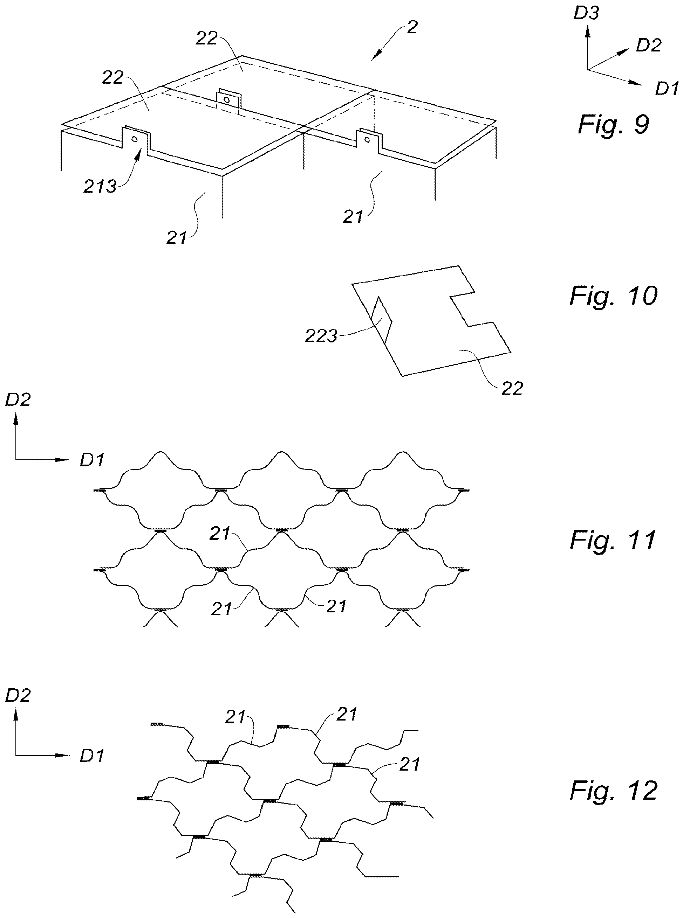

Dans le mode de réalisation des figures 9 et 10, l'élément de peau 22 comprend une patte 223 agencée pour être fixée à une patte 213 d'une cloison latérale 21. Un tel élément de peau 22 peut être fixé à une cloison latérale 21 correspondante par exemple par rivetage, poinçonnage, collage, brasage, soudage, ou encore enclipsage de leur patte de fixation 213 et 223 respective.

Une deuxième type de lien consiste à réaliser l'élément de peau 22 et la cloison latérale 21 à laquelle il est relié en une seule pièce.

La figure 7 illustre un tel type de lien en montrant un canal d'une structure alvéolaire comprenant un élément de peau 22. L'élément de peau 22 est réalisé en une seule pièce avec une cloison latérale 21 de ce canal. Dans cet exemple, l'élément de peau 22 est représenté « déplié » de sorte que la fermeture de ce canal nécessite de « plier » cet élément de peau 22 au niveau d'une zone de pli Z1.

La figure 8 montre une structure alvéolaire 2 comprenant des canaux similaires au canal de la figure 7, les éléments de peau 22 étant pliés de manière à fermer des canaux correspondants.

En cas de pliage d'un élément de peau 22 par rapport à une cloison latérale 21 avec laquelle il forme une seule pièce (deuxième type de lien décrit ci-dessus), on peut de préférence surplier l'élément de peau 22 lors de l'assemblage de la structure alvéolaire 2 de sorte que l'angle formé par cet élément de peau 22 et cette cloison latérale 21 soit inférieur à 90°. Un tel surpliage crée un effet ressort et permet de maintenir l'élément de peau 22 plaqué contre une ou plusieurs cloisons latérales 21 du canal qu'il ferme et/ou contre un ou plusieurs éléments de peau adjacents.

Lorsque l'élément de peau 22 est rapporté (premier type de lien décrit ci-dessus), celui-ci peut avoir une forme légèrement convexe de manière à favoriser un tel effet ressort et maintenir ainsi l'élément de peau 22 plaqué contre une ou plusieurs cloisons latérales 21 du canal qu'il ferme et/ou contre un ou plusieurs éléments de peau adjacents.

Selon l'invention, chaque élément de peau 22, 23 relié à une cloison latérale 21 respective est mobile par rapport aux autres cloisons latérales 21 et de préférence par rapport aux autres éléments de peau 22, 23 dans toute direction longitudinale D1, D2. Dans cet exemple, les éléments de peau 22, 23 sont parallèles aux directions D1 et D2 (voir par exemple figure 8).

En particulier, pour chaque canal, au moins un élément de peau 22 est relié à une cloison latérale 21 respective de ce canal et n'est pas fixé aux autres cloisons latérales 21 de ce canal.

Ces caractéristiques ressortent directement de la figure 7 qui montre un élément de peau 22 relié à une cloison latérale 21 de manière à pouvoir être plié par rapport à cette cloison latérale 21. Ainsi, un tel élément de peau 22 n'est pas fixé aux autres cloisons latérales de ce canal et d'une structure alvéolaire comprenant un tel canal.

En outre, lorsqu'un élément de peau 22 est plié de manière à fermer un canal, comme cela est illustré à la figure 8, un élément de peau 22 peut être recouvert par un autre élément de peau 22 et être ainsi immobilisé transversalement (dans la direction D3) contre les cloisons latérales 21 du canal qu'il ferme et auxquelles il n'est pas fixé. Un tel élément de peau 22 peut donc être immobile par rapport à ces cloisons latérales 21 suivant la direction transversale D3 de la structure alvéolaire 2. Un tel élément de peau 22 reste toutefois mobile par rapport à ces cloisons latérales 21 suivant une direction longitudinale D2 et/ou D1 de la structure alvéolaire 2.

En cas de recouvrement mutuels d'éléments de peau 22, par exemple lorsqu'un élément de peau 22 donné qui est relié à une cloison latérale 21 d'un premier canal est recouvert par au moins un élément de peau 22 relié à une cloison latérale 21 d'un deuxième canal adjacent au premier canal, une entaille 25 peut être réalisée entre l'élément de peau 22 et la cloison latérale 21 à laquelle il est relié (voir figures 7 et 8). Une telle entaille 25 permet d'une part de recevoir un élément de peau 22 adjacent et, d'autre part, de l'immobiliser suivant la direction transversale D3 et de lui permettre de glisser dans les directions D1 et D2.

De cette façon, les éléments de peau 22 peuvent être imbriqués les uns aux autres selon les exemples des figures 6 et 8.

En référence aux figures 2 à 4, lorsqu'un canal est au moins partiellement fermé par deux éléments de peau 22 et 23 propres à ce canal, ces éléments de peau 22 et 23 peuvent, au moins partiellement, être superposés. Voir par exemple le canal 33 de la figure 4 où le premier élément de peau 22 de ce canal 33 recouvre partiellement le deuxième élément de peau 23 de ce canal 33.

De plus, une partie d'un élément de peau 22 d'un premier canal peut recouvrir une partie d'au moins un autre élément de peau 22 et/ou 23 d'au moins un deuxième canal adjacent au premier canal.

Ainsi, dans l'exemple de la figure 4, la partie 221 de l'élément de peau 22 du canal 32 recouvre une partie de l'élément de peau 231 du canal 31 adjacent au canal 32.

La structure alvéolaire 2 de la figure 8 montre aussi un recouvrement de chaque élément de peau 22 par au moins un autre élément de peau 22.

Concernant l'agencement des cloisons latérales 21, de nombreuses géométries de canaux peuvent être réalisées sans sortir du cadre de l'invention.

Dans l'exemple de la figure 6, chaque canal est délimité par six cloisons latérales 21a à 21f (voir le canal situé en bas à gauche de cette figure). Dans cet exemple, les cloisons latérales 21a à 21d ont une surface plus importante que les cloisons latérales 21e et 21f.

Dans cet exemple, l'élément de peau 229 (similaire aux autres éléments de peau 22 de la structure de la figure 6) est relié à la cloison latérale 21b. Les cloisons latérales 21e et 21f constituent ici des « joints nodaux », chaque joint nodal d'un canal étant agencé pour être relié à un joint nodal d'un canal adjacent.

Lorsque la structure alvéolaire 2 comprend des joints nodaux, deux joints nodaux peuvent être fixés entre eux par collage, brasage, soudage, rivetage par rivet ou par poinçonnage, ou tout procédé d'assemblage connu.

De préférence, la structure alvéolaire 2 peut être agencée de sorte que deux cloisons latérales 21 adjacentes de deux canaux adjacents respectifs ne soient pas coplanaires. Ainsi par exemple, les deux canaux représentés en bas à gauche de la figure 8 comprennent chacun une cloison latérale 21 située à une coordonnée différente suivant D2. Autrement dit, un plan contenant la cloison latérale 21 de l'un de ces canaux est différent d'un plan contenant la cloison latérale 21 de l'autre de ces canaux, ces deux plans pouvant en l'occurrence être parallèles au plan D1-D3.

Dans l'exemple de la figure 5, le canal comprend des cloisons latérales 21 formant de multiples facettes.

Les figures 11 et 12 illustrent d'autres formes ou agencements de cloisons latérales 21 formant des parois ondulés ou des facettes angulées entre elles.

Dans les exemples de structure alvéolaire 2 qui précèdent, chaque canal est ouvert en sa deuxième extrémité.

Plus spécifiquement, chaque canal constitue de préférence une partie de cavité de Helmholtz agencée pour atténuer un bruit généré par un turboréacteur ou une turbomachine d'aéronef lorsque ce canal est au moins partiellement fermé en sa deuxième extrémité.

Une telle structure alvéolaire 2 peut donc être assemblée avec une peau continue (non représentée) fermant au moins partiellement les canaux en leur deuxième extrémité de manière à constituer un dispositif d'atténuation acoustique pour nacelle d'ensemble propulsif (turboréacteur ou turbomachine) d'aéronef.

A cet effet, au moins les deux alternatives suivantes peuvent être mises en œuvre :
- Première alternative : la peau continue (non représentée) peut être agencée pour laisser pénétrer des ondes acoustiques dans les canaux de la structure alvéolaire 2, par exemple au travers d'orifices réalisés dans la peau continue. Selon cette première alternative, chaque canal constitue une cavité de Helmholtz ayant un fond de cavité constitué par la peau discontinue, par au moins un élément de peau.
- Deuxième alternative : une partie au moins des éléments de peau 22 et/ou 23 de la structure alvéolaire 2 peut être agencée pour laisser pénétrer des ondes acoustiques dans les canaux de cette structure alvéolaire 2, par exemple au travers d'orifices (non représentés) réalisés dans ces éléments de peau 22 et/ou 23. Selon cette deuxième alternative, chaque canal constitue une cavité de Helmholtz ayant un fond de cavité constitué par ladite peau continue (non représentée).

Un tel dispositif d'atténuation acoustique peut comprendre plusieurs combinaisons de matériaux.

Par exemple, la structure alvéolaire 2 peut comprendre un matériau métallique et la peau continue (non représentée) peut comprendre un matériau composite. Dans ce cas, la structure alvéolaire 2 et la peau continue (non représentée) peuvent être collées l'une à l'autre.

Pour autre exemple, la structure alvéolaire 2 peut comprendre du titane ou un alliage de titane, ou encore comprendre du nickel ou un alliage de nickel, et la peau continue (non représentée) peut comprendre un matériau céramique, notamment un matériau composite à matrice céramique, notamment un matériau composite à fibres céramique et matrice céramique de la famille des oxydes d'aluminium. Dans ce cas, la structure alvéolaire 2 et la peau continue (non représentée) peuvent être collées l'une à l'autre avec une colle céramique. Par exemple on peut utiliser des colles de la famille des CERAMABOND® ou un mix de résine précéramique et de charges d'alumine qui sera ensuite consolidé par cycle thermique.

La fixation de la structure alvéolaire 2 avec la peau continue (non représentée) peut être réalisée de multiples manières alternatives ou complémentaires, incluant l'utilisation de fixations traversantes, le collage, le brasage, etc.

Bien entendu, l'invention n'est pas limitée aux exemples qui viennent d'être décrits et de nombreux aménagements peuvent être apportés à ces exemples sans sortir du cadre de l'invention. Par exemple, si l'on souhaite notamment faciliter la fixation des éléments de peau ou la fabrication de la structure alvéolaire tout en conservant le principe de l'invention, un aménagement des exemples décrits ci-dessus peut consister à agencer les éléments de peau de sorte que :
- chaque canal d'une première série de canaux soit au moins partiellement fermé en sa première extrémité par au moins un élément de peau propre à ce canal, c'est-à-dire par au moins un élément de peau fermant au moins partiellement ce canal uniquement, et/ou
- plusieurs groupes de canaux d'une deuxième série de canaux soient au moins partiellement fermés en leur première extrémité par un même élément de peau respectif, c'est-à-dire qu'un élément de peau peut fermer au moins partiellement plusieurs canaux d'un tel groupe (non représenté).

## Revendications

1. Structure alvéolaire (2) pour dispositif d'atténuation acoustique pour nacelle (1) d'ensemble propulsif d'aéronef, cette structure (2) comprenant des cloisons latérales (21) formant des canaux qui s'étendent chacun entre une première extrémité et une deuxième extrémité, cette structure (2) étant **caractérisée en ce qu'**elle comprend des éléments de peau (22, 23) agencés de sorte que chaque canal soit au moins partiellement fermé en sa première extrémité par au moins un élément de peau (22, 23), **en ce que** chaque élément de peau (22, 23) est relié à une cloison latérale (21) respective et est mobile par rapport aux autres cloisons latérales, et **en ce que** les éléments de peaux (22, 23) forment une peau discontinue agencée pour fermer au moins partiellement l'ensemble des canaux en leur première extrémité.

2. Structure alvéolaire (2) selon la revendication 1, dans laquelle chaque élément de peau (22, 23) est fixé à une cloison latérale (21) respective, de préférence par soudage ou rivetage ou boulonnage ou sertissage ou collage.

3. Structure alvéolaire (2) selon la revendication 1, dans laquelle chaque élément de peau (22, 23) constitue avec la cloison latérale (21) à laquelle il est relié une pièce unique.

4. Structure alvéolaire (2) selon l'une quelconque des revendications 1 à 3, dans laquelle chaque canal est au moins partiellement fermé en sa première extrémité par un premier élément de peau (22) et un deuxième élément de peau (23).

5. Structure alvéolaire (2) selon la revendication 4, dans laquelle, pour chaque canal, ledit premier élément de peau (22) et ledit deuxième élément de peau (23) sont au moins partiellement superposés.

6. Structure alvéolaire (2) selon l'une quelconque des revendications 1 à 5, dans laquelle une partie d'un élément de peau (221) d'un premier canal (32) recouvre une partie d'au moins un autre élément de peau (231) d'au moins un deuxième canal (31) adjacent au premier canal (32).

7. Structure alvéolaire (2) selon l'une quelconque des revendications 1 à 6, dans laquelle chaque canal est délimité par au moins quatre cloisons latérales, plus préférentiellement par au moins six cloisons latérales (21a-21f).

8. Structure alvéolaire (2) selon l'une quelconque des revendications 1 à 7, agencée de sorte que deux cloisons latérales adjacentes de deux canaux adjacents respectifs ne soient pas coplanaires.

9. Structure alvéolaire (2) selon l'une quelconque des revendications 1 à 8, dans laquelle, pour chaque canal, une ou plusieurs cloisons latérales (21) comprennent des parois ondulées ou des facettes angulées entre elles.

10. Structure alvéolaire (2) selon l'une quelconque des revendications 1 à 9, dans laquelle chaque canal constitue une partie de cavité de Helmholtz agencée pour atténuer un bruit généré par un ensemble propulsif d'aéronef lorsque ce canal est au moins partiellement fermé en sa deuxième extrémité.

11. Dispositif d'atténuation acoustique pour nacelle (1) d'ensemble propulsif d'aéronef, **caractérisé en ce qu'**il comprend une structure alvéolaire (2) selon l'une quelconque des revendications 1 à 10 et une peau continue fermant au moins partiellement les canaux de cette structure alvéolaire (2) en leur deuxième extrémité.

12. Dispositif selon la revendication 11, dans lequel ladite peau continue est agencée pour laisser pénétrer des ondes acoustiques dans les canaux de la structure alvéolaire (2), chaque canal constituant une cavité de Helmholtz ayant un fond de cavité constitué par au moins un élément de peau (22, 23).

13. Dispositif selon la revendication 11, dans lequel une partie au moins des éléments de peau (22, 23) de la structure alvéolaire (2) est agencée pour laisser pénétrer des ondes acoustiques dans les canaux de cette structure alvéolaire (2), chaque canal constituant une cavité de Helmholtz ayant un fond de cavité constitué par ladite peau continue.

14. Dispositif selon l'une quelconque des revendications 11 à 13, dans lequel la structure alvéolaire (2) comprend un matériau métallique et la peau continue comprend un matériau composite, la structure alvéolaire (2) et la peau continue étant collées l'une à l'autre.

15. Dispositif selon l'une quelconque des revendications 11 à 13, dans lequel la structure alvéolaire (2) comprend du titane ou un alliage de titane ou du nickel ou un alliage de nickel, et la peau continue comprend un matériau céramique, la structure alvéolaire (2) et la peau continue étant collées l'une à l'autre avec une colle céramique.

16. Dispositif d'atténuation acoustique pour nacelle (1) d'ensemble propulsif d'aéronef, **caractérisé en ce qu'**il comprend :
- une première structure alvéolaire (2) selon l'une quelconque des revendications 1 à 10,
- une deuxième structure alvéolaire comprenant des canaux qui s'étendent chacun entre une première extrémité et une deuxième extrémité,
- au moins un septum agencé pour séparer la première et la deuxième structure alvéolaire de manière à fermer au moins partiellement les canaux de la première structure alvéolaire (2) en leur deuxième extrémité et les canaux de la deuxième structure alvéolaire en leur première extrémité,
- une peau continue fermant au moins partiellement les canaux de la deuxième structure alvéolaire en leur deuxième extrémité.

17. Nacelle (1) d'ensemble propulsif d'aéronef, **caractérisée en ce qu'**elle comprend un dispositif d'atténuation acoustique selon l'une quelconque des revendications 11 à 16 et/ou une structure alvéolaire (2) selon l'une quelconque des revendications 1 à 10.

## Patentansprüche

1. Zellstruktur (2) für eine Schalldämpfungsvorrichtung für eine Gondel (1) einer Flugzeugantriebsanordnung, wobei diese Struktur (2) seitliche Trennwände (21) umfasst, die Kanäle bilden, die sich jeweils zwischen einem ersten Ende und einem zweiten Ende erstrecken, wobei diese Struktur (2) **dadurch gekennzeichnet ist, dass** sie Hüllenelemente (22, 23) umfasst, die so angeordnet sind, dass jeder Kanal wenigstens teilweise in seinem ersten Ende von wenigstens einem Hüllenelement (22, 23) verschlossen wird, dadurch, dass jedes Hüllenelement (22, 23) mit einer jeweiligen seitlichen Trennwand (21) verbunden ist und in Bezug auf die anderen Trennwände beweglich ist, und dadurch, dass die Hüllenelemente (22, 23) eine unterbrochene Hülle bilden, die angeordnet ist, um die Anordnung der Kanäle in ihrem ersten Ende wenigstens teilweise zu verschließen.

2. Zellstruktur (2) nach Anspruch 1, wobei jedes Hüllenelement (22, 23) an einer jeweiligen seitlichen Trennwand (21) befestigt ist, vorzugsweise durch Schweißen oder Nieten oder Verschrauben oder Crimpen oder Kleben.

3. Zellstruktur (2) nach Anspruch 1, wobei jedes Hüllenelement (22, 23) mit der seitlichen Trennwand (21), mit der es verbunden ist, ein Einzelteil bildet.

4. Zellstruktur (2) nach einem der Ansprüche 1 bis 3, wobei jeder Kanal in seinem ersten Ende wenigstens teilweise von einem ersten Hüllenelement (22) und einem zweiten Hüllenelement (23) verschlossen wird.

5. Zellstruktur (2) nach Anspruch 4, wobei sich, für jeden Kanal, das erste Hüllenelement (22) und das zweite Hüllenelement (23) wenigstens teilweise überlagern.

6. Zellstruktur (2) nach einem der Ansprüche 1 bis 5, wobei ein Teil eines Hüllenelements (221) eines ersten Kanals (32) einen Teil von wenigstens einem anderen Hüllenelement (231) wenigstens eines zweiten Kanals (31), der an den ersten Kanal (32) angrenzt, bedeckt.

7. Zellstruktur (2) nach einem der Ansprüche 1 bis 6, wobei jeder Kanal von wenigstens vier seitlichen Trennwänden begrenzt ist, besonders bevorzugt von wenigstens sechs seitlichen Trennwänden (21a-21f).

8. Zellstruktur (2) nach einem der Ansprüche 1 bis 7, die so angeordnet ist, dass zwei seitliche Trennwände, die an zwei jeweilige aneinandergrenzende Kanäle angrenzen, nicht komplanar sind.

9. Zellstruktur (2) nach einem der Ansprüche 1 bis 8, wobei, für jeden Kanal, eine oder mehrere seitliche Trennwände (21) gewellte Wände oder zueinander abgewinkelte Facetten umfassen.

10. Zellstruktur (2) nach einem der Ansprüche 1 bis 9, wobei jeder Kanal einen Teil eines Helmholtz-Hohlraums bildet, der angeordnet ist, um ein Geräusch zu dämpfen, das von einer Flugzeugantriebsanordnung erzeugt wird, wenn dieser Kanal wenigstens teilweise in seinem zweiten Ende verschlossen wird.

11. Schalldämpfungsvorrichtung für eine Gondel (1) einer Flugzeugantriebsanordnung, **dadurch gekennzeichnet, dass** sie eine Zellstruktur (2) nach einem der Ansprüche 1 bis 10 und eine durchgehende Hülle umfasst, die die Kanäle dieser Zellstruktur (2) in ihrem zweiten Ende wenigstens teilweise verschließt.

12. Vorrichtung nach Anspruch 11, wobei die durchgehende Hülle angeordnet ist, um Schallwellen in die Kanäle der Zellstruktur (2) eindringen zu lassen, wobei jeder Kanal einen Helmholtz-Hohlraum bildet, der einen Hohlraumboden aufweist, der von wenigstens einem Hüllenelement (22, 23) gebildet wird.

13. Vorrichtung nach Anspruch 11, wobei wenigstens ein Teil der Hüllenelemente (22, 23) der Zellstruktur (2) angeordnet ist, um Schallwellen in die Kanäle dieser Zellstruktur (2) eindringen zu lassen, wobei jeder Kanal einen Helmholtz-Hohlraum bildet, der einen Hohlraumboden aufweist, der von der durchgehenden Hülle gebildet wird.

14. Vorrichtung nach einem der Ansprüche 11 bis 13, wobei die Zellstruktur (2) ein Metallmaterial umfasst und die durchgehende Hülle ein Verbundmaterial umfasst, wobei die Zellstruktur (2) und die durchgehende Hülle aneinander geklebt ist.

15. Vorrichtung nach einem der Ansprüche 11 bis 13, wobei die Zellstruktur (2) Titan oder eine Legierung aus Titan oder Nickel oder eine Nickellegierung umfasst und die durchgehende Hülle ein Keramikmaterial umfasst, wobei die Zellstruktur (2) und die durchgehende Hülle mit einem Keramikkleber aneinander geklebt sind.

16. Schalldämpfungsvorrichtung für eine Gondel (1) einer Flugzeugantriebsanordnung, **dadurch gekennzeichnet, dass** sie umfasst:
- eine erste Zellstruktur (2) nach einem der Ansprüche 1 bis 10,
- eine zweite Zellstruktur, die Kanäle umfasst, die sich jeweils zwischen einem ersten Ende und einem zweiten Ende erstrecken,
- wenigstens ein Septum, das angeordnet ist, um die erste und die zweite Zellstruktur zu trennen, sodass die Kanäle der ersten Zellstruktur (2) in ihrem zweiten Ende und die Kanäle der zweiten Zellstruktur in ihrem ersten Ende wenigstens teilweise verschlossen werden,
- eine durchgehende Hülle, die die Kanäle der zweiten Zellstruktur in ihrem zweiten Ende wenigstens teilweise verschließt.

17. Gondel (1) einer Flugzeugantriebsanordnung, **dadurch gekennzeichnet, dass** sie eine Schalldämpfungsvorrichtung nach einem der Ansprüche 11 bis 16 und/oder eine Zellstruktur (2) nach einem der Ansprüche 1 bis 10 umfasst.

## Claims

1. A cellular structure (2) for an acoustic attenuation device for an aircraft propulsion unit nacelle (1), this structure (2) comprising lateral partition walls (21) forming channels each extending between a first end and a second end, this structure (2) being **characterized in that** it comprises skin elements (22, 23) arranged so that each channel is at least partially closed at its first end by at least one skin element (22, 23), **in that** each skin element (22, 23) is connected to a respective lateral partition wall (21) and is movable relative to the other lateral partition walls, and **in that** the skin elements (22, 23) form a discontinuous skin arranged to at least partially close all of the channels at their first end.

2. The cellular structure (2) according to claim 1, wherein each skin element (22, 23) is fastened to a respective lateral partition wall (21), preferably by welding or riveting or bolting or crimping or gluing.

3. The cellular structure (2) according to claim 1, wherein each skin element (22, 23) constitutes with the lateral partition wall (21) to which it is connected one single piece.

4. The cellular structure (2) according to any one of claims 1 to 3, wherein each channel is at least partially closed at its first end by a first skin element (22) and a second skin element (23).

5. The cellular structure (2) according to claim 4, wherein, for each channel, said first skin element (22) and said second skin element (23) are at least partially superimposed.

6. The cellular structure (2) according to any one of claims 1 to 5, wherein a portion of a skin element (221) of a first channel (32) covers a portion of at least one other skin element (231) of at least one second channel (31) adjacent to the first channel (32).

7. The cellular structure (2) according to any one of claims 1 to 6, wherein each channel is delimited by at least four lateral partitions, more preferably by at least six lateral partition walls (21a-21f).

8. The cellular structure (2) according to any one of claims 1 to 7, arranged so that two adjacent lateral partition walls of two respective adjacent channels are not coplanar.

9. The cellular structure (2) according to any one of claims 1 to 8, wherein, for each channel, one or several lateral partition wall(s) (21) comprise corrugated walls or angled facets therebetween.

10. The cellular structure (2) according to any one of claims 1 to 9, wherein each channel constitutes a portion of a Helmholtz cavity arranged to attenuate a noise generated by an aircraft propulsion unit when this channel is at least partially closed at its second end.

11. An acoustic attenuation device for an aircraft propulsion unit nacelle (1), **characterized in that** it comprises a cellular structure (2) according to any one of claims 1 to 10 and a continuous skin closing at least partially the channels of this cellular structure (2) at their second end.

12. The device according to claim 11, wherein said continuous skin is arranged to let acoustic waves penetrate into the channels of the cellular structure (2), each channel constituting a Helmholtz cavity having a cavity bottom constituted by at least one skin element (22, 23).

13. The device according to claim 11, wherein at least one portion of the skin elements (22, 23) of the cellular structure (2) is arranged to let acoustic waves penetrate into the channels of this cellular structure (2), each channel constituting a Helmholtz cavity having a cavity bottom constituted by said continuous skin.

14. The device according to any one of claims 11 to 13, wherein the cellular structure (2) comprises a metallic material and the continuous skin comprises a composite material, the cellular structure (2) and the continuous skin being glued to each other.

15. The device according to any one of claims 11 to 13, wherein the cellular structure (2) comprises titanium or a titanium alloy or nickel or a nickel alloy, and the continuous skin comprises a ceramic material, the cellular structure (2) and the continuous skin being glued to each other with a ceramic glue.

16. The acoustic attenuation device for an aircraft propulsion unit nacelle (1), **characterized in that** it comprises:
- a first cellular structure (2) according to any one of claims 1 to 10,
- a second cellular structure comprising channels each extending between a first end and a second end,
- at least one septum arranged to separate the first and the second cellular structure so as to at least partially close the channels of the first cellular structure (2) at their second end and the channels of the second cellular structure at their first end,
- a continuous skin at least partially closing the channels of the second cellular structure at their second end.

17. An aircraft propulsion unit nacelle (1), **characterized in that** it comprises an acoustic attenuation device according to any one of claims 11 to 16 and/or a cellular structure (2) according to any one of claims 1 to 10.
